# EUROPEAN PATENT APPLICATION

(11) **EP 4 685 463 A1**
(43) Date of publication of application: **28.01.2026**
(21) Application number: 24191315.1
(22) Date of filing: 26.07.2024
(51) Int. Cl.: G01N 15/149, G01N 15/1433, G01N 15/1434, G01N 15/1429, G01N 15/14, G01N 15/10

(54) **DEVICE AND METHOD FOR TRACKING BIOLOGICAL CELLS**

(71) Applicant: Imec VZW, 3001 Leuven (BE)
(72) Inventor: JAYAPALA, Murali, 3300 Kumtich (BE); VAN ROY, Willem, 3360 Bierbeek (BE); PEUMANS, Peter, 1540 Herfelingen (BE)
(74) Representative: AWA Sweden AB

(57) **Abstract**

According to an aspect of the present inventive concept there is provided a device for tracking cells comprising: a flow channel, the flow channel comprises at least one zone, associated with a cell category, configured to modify movement of the cell in dependence of the cell belonging to the cell category; an imaging sensor being configured to detect the flow of liquid in the flow channel in a plurality of regions, to track the cells through the plurality of regions; wherein the imaging sensor is configured to sequentially image the cell, wherein the cell in consecutive images has moved a distance below a threshold value, wherein the imaging sensor is configured to acquire frames, wherein a frame rate associated with the first region is set such that, between consecutive frames, a distance travelled by a supposed cell moving at the second speed is larger than the threshold value.

## Description

### Technical field

The present description relates to a device and a method for tracking biological cells.

### Background

Tracking of biological cells is important for cell analysis and cell therapy. From tracking the biological cells, data can be acquired of the cell behavior which can be later used for further analysis or sorting of the cells.

Using label-free tracking methods enables the biological cells to be tracked by a non-invasive method, allowing the biological cells to be further used without being affected by any labels. Tracking of biological cells can be challenging as the cells move in random motions and at different speed. Thus, there is a need in the art for improvements.

### Summary

An objective of the present description is to enable tracking of biological cells. It is a further objective to provide a device for label-free tracking of biological cells. It is a further objective to provide a device for tracking of cells moving at different speed.

These and other objectives of the invention are at least partly met by the invention as defined in the independent claims. Preferred embodiments are set out in the dependent claims. In the following the term cell refers to a biological cell, unless otherwise stated.

According to an aspect, there is provided a device for tracking biological cells, the device comprising:
a flow channel configured to pass a flow of liquid, wherein:
   the flow of liquid carries the biological cells to be tracked,
   the flow channel comprises at least one zone,
   each zone of the flow channel is associated with a cell category, wherein the zone of the flow channel is configured to modify movement of the biological cell in dependence of the biological cell belonging to the cell category;
an imaging sensor configured to detect an interference pattern by receiving object light, which is incident on the imaging sensor after having interacted with the biological cells, and reference light, which is incident on the imaging sensor without having interacted with the biological cells, the imaging sensor being configured to detect the flow of liquid in the flow channel in a plurality of regions of the flow channel including the at least one zone to track the biological cells through the plurality of regions, wherein the biological cell exhibits a first speed in a first region and a second speed in a second region, the first speed being lower than the second speed;
wherein the imaging sensor is configured to sequentially image the biological cell flowing through the plurality of regions, wherein the biological cell in consecutive images has moved a distance below a threshold value, wherein the imaging sensor is configured to acquire frames, wherein a frame rate associated with the first region is set such that, between consecutive frames, a distance travelled by a supposed biological cell moving at the second speed is larger than the threshold value.

Cells may be characterized by the molecules they comprise, e.g. the molecules comprised in the cell membrane. Molecules comprised in the cell membrane may e.g. be antigens. A way of checking whether a cell comprises a certain cell membrane molecule may be to let the cell react with a molecule that binds specifically to said cell membrane molecule. For example, an antigen may correspond to one or more antibodies, where the antigen and antibody binds specifically to each other. Consequently, cells may be divided into cell categories depending on which cell membrane molecules they comprise or which molecules the cells bind to. For example, the antigen CD4 (cluster of differentiation 4) molecule in cell membranes is a glycoprotein which binds to anti-CD4 antibodies. Cells that bind to anti-CD4 antibodies may form one cell category. Such cells may be detected based on their modified movements when they travel through a zone associated with the cell category CD4 positive cells. Analogously, cells that bind to anti-CD8 (cluster of differentiation 8) antibodies may form another cell category. Such cells may be detected based on their modified movements when they travel through a zone associated with the cell category CD8 positive cells. Thus, a cell category may be a category of cells which binds to a specific molecule such as an antibody.

The at least one zone of the flow channel being associated with a cell category may for instance comprise at least one surface of a wall of the flow channel coated with molecules having an affinity to the cell category associated with the zone. Alternatively, the at least one zone of the flow channel being associated with a cell category may comprise pillars or other obstacles having at least one surface coated with molecule having an affinity of the cell category associated with the zone. This coating may comprise at least one of: antibodies, aptamers, or lectins. Antibodies, or aptamers, or lectins may have an affinity to specific cell categories but not to other cell categories. Antibodies, or aptamers, or lectins may bind to specific cell categories but not to other cell categories. Antibodies, or aptamers, or lectins may have a high sensitivity in binding to a cell category. Thus, the percentage of true positive binding events may be high. Antibodies, or aptamers, or lectins may have a high specificity in binding to a cell category. Thus, the percentage of true negative binding events may be high. Alternatively, the molecules coating at least one CMM surface of the at least one zone of the flow channel may comprise other molecules than antibodies, aptamers, and lectins, e.g. comprise other molecules that binds specifically to a cell membrane molecule.

The at least one zone of the flow channel may be configured to modify the movement of the cell belonging to the associated cell category of the zone by modifying e.g. the speed, direction or path of cells comprised in the cell category. For example, the at least one zone of the flow channel may be configured to modify the movement of the cell belonging to the associated cell category of the zone by binding and releasing the cell belonging to the associated cell category of the zone. Such a movement may be termed a bind-release movement. Thus, the at least one zone may be configured not to bind a cell indefinitely. Binding and releasing the cell may temporarily halt the cell along its travel. Such a modified movement in the form of a modified speed may be detectable and tracked. The cell may not necessarily bind and release at the same point of the at least one zone. The zone may be configured to let a cell bind to the at least one zone, roll a distance along the at least one zone and then release from the at least one zone in a bind-roll-release movement. The cell may e.g. roll along a surface of the at least one zone in a direction different from the direction of the flow of liquid. Thus, the direction or path of a cell belonging to a category associated with the at least one zone may be different from the path of a cell belonging to a category not associated with the at least one zone. Such a modified movement in the form of a modified direction or path may be detectable.

Thus, a modified movement may be a revealing sign which enables the cell category of a cell to be determined with high accuracy. It may e.g. be very improbable that a cell exhibits a modified movement, e.g. a bind-release movement or a bind-roll-release movement at a zone without having an affinity to the molecules of the zone. Thus, the probability of false positive detection events may be low.

The imaging sensor is configured to detect an interference pattern by receiving object light, which is incident on the imaging sensor after having interacted with the biological cells, and reference light, which is incident on the imaging sensor without having interacted with the biological cells.

The imaging sensor is configured to detect the flow of liquid carrying the biological cells, to track the biological cells through the plurality of regions of the flow channel. Thus, the flow channel may be divided into a plurality of regions. The plurality of regions may overlap with the at least one zone such that one region exactly fits over the at least one zone. However, the plurality of regions may as well overlap the at least one zone in such a way that two or more regions covers one zone.

The biological cell exhibits a first speed in a first region and a second speed in a second region. Thus, a cell belonging to a cell category may have a movement being affected by both the at least one zone being associated with the cell category and a speed of the movement differing between the first and the second region.

The speed of a biological cell may be affected by for instance the width of the flow channel. Thus, a flow channel having different widths at different locations of the channel may affect the speed of the flow of liquid carrying the cells. As an example, the flow channel may have an inlet having a wide width setting the flow of liquid at a medium speed. In this part of the channel all cells will have a similar speed. Next, the flow of liquid may enter the at least one zone. As the flow of liquid may carry cells belonging to the cell category of the at least one zone as well as cells not belonging to the cell category of the at least one zone, the speed may vary between the cells. Even if the flow of liquid only comprises cells belonging to the cell category to the at least one zone, the interaction between the at least one CMM surface of the at least one zone and the biological cells may slow down the speed of all cells. Thus, the speed of the cells being inside of the at least one zone may differ from the cells entering the inlet of the flow channel. Last, the flow channel may again have a different width. For example, a flow channel for sorting of cells may have an outlet being narrow to allow for only single cells to flow through the channel. Again, this may change the speed of the cells.

The speed of the cells within a region of the flow channel may be an interval of speeds. Thus, the speed may vary within a region, due to interaction with the CMM surface of the zone causing a modified movement or for other reasons such that a varying flow. However, regardless of variations, the second speed will be larger than the first speed, e.g. based on a width of the flow channel in the second region being substantially smaller than a width of the flow channel in the first region.

The imaging sensor is configured to sequentially image the biological cell flowing through the plurality of regions. Thus, a plurality of images are acquired while the cell is moving through the flow channel. The sequential images may be acquired as a time-lapse movie of the cells. A biological cell in consecutive images moves a distance below a threshold value between two sequential images. Thus, between two sequential images the cell has not moved too far. It is a realization that keeping the imaging at a rate where the cell has moved below a threshold value allows the imaging to capture the individual cells at all times, leading to no blind gaps of the cell between two consecutive images.

The imaging sensor is further configured to acquire frames. The frame rate associated with the first region is set such that, between consecutive frames, a distance travelled by a supposed biological cell moving at the second speed is larger than the threshold value. The supposed cell should be understood as an imaginary cell moving at the second speed. Thus, the distance travelled by the supposed cell is the distance that would be travelled by such a cell if there would be such a cell traveling through the first region. When moving through the flow channel, the actual biological cell has, different speed in each or some of the plurality of regions. In the first region, the speed is lower than in the second region. Thus the frame rate of the first region is not set in relation to what is needed in the second region, but at a lower frame rate. Thus, processing requirements for forming the images of the first region may be lenient and not forced to meet frame rates that may be needed for the second region.

In the second region, the frame rate may be set such that the actual biological cell moving at the second speed has not moved above a threshold value between two consecutive frames. In the second region, the speed of the actual biological cells is high and, therefore, the frame rate may be set such that the biological cell moving at the second speed is not allowed to move a large distance between two frames.

When the cells move through the flow channel, the different speeds occurring in the plurality of regions leads to a challenge in covering all cells at all times with the imaging sensor. It is a realization that the combination of the sequential images and the frame rate of the imaging sensor can solve this problem, as the imaging and the acquisition of frames may be adapted to the speed within the different regions.

It should be realized that avoiding that the cell has moved a distance larger than a threshold between two consecutive images the biological cell may be achieved by using a high frame rate. However, if the frame rate would be selected such that a biological cell moving at maximum speed within the flow channel cannot move a distance larger than a threshold between two consecutive images, the frame rate would need to high. As a high frame rate also requires large computing resources and large power consumption, a high frame rate should be avoided.

Therefore, according to the first aspect, a frame rate in the first region is set to be smaller than what would be required for imaging of a biological cell moving at maximum speed within the flow channel. The relatively low frame rate associated with the first region may be used, since the biological cells do not move at a high speed in the first region, at least not at the maximum speed of a biological cell within the entire flow channel.

It should further be realized that the frame rate need not necessarily correspond to a rate of imaging of the biological cell. Rather, in some embodiments, a plurality of time sequential images may be acquired within a single frame. This may be achieved by a pulsed illumination of the flow channel such that a plurality of images corresponding to a plurality of pulses of the pulsed illumination may be acquired within a single frame. This may be utilized for using a relatively low frame rate while enabling a biological cell to be imaged with a short time duration between consecutive images.

Thus, it should be realized that, as used herein, a frame is represented by read-out of image information from the imaging sensor in a single exposure, whereas an image of the biological cell corresponds to a representation of the biological cell at a particular point in time. It should be realized that the representation of the biological cell need not be uniquely linked to a single frame. Rather, a plurality of images of the biological cell may be provided in a single frame thanks to a sequence of illumination pulses while acquiring a single frame causing discrete representations of the biological cell within the single frame.

However, it should be realized that in other embodiments, when pulsed illumination is not used, a biological cell is imaged once per frame.

The device may comprise a plurality of imaging sensors. The multiple imaging sensors may image a larger area than a single imaging sensor could. Thus, the device may comprise a plurality of imaging sensors each covering one or a plurality of regions. For instance, a first imaging sensor may be associated with the first region and a second imaging sensor may be associated with the second region. Moreover, the first region may be associated with a plurality of imaging sensors and the second region may be associated with a plurality of imaging sensors. The first region and the second region may be associated with different number of imaging sensors. This may for instance be adapted to the speed of the biological cells. A plurality of imaging sensors may overlap, such that both the sequential imaging and the sequential frames may overlap in a way such that no time gaps appear for a cell moving through the flow channel.

The imaging sensor may be configured to detect one modified movement of a cell in a zone, e.g. one bind and release event, a halt of motion, a change of speed, a change of direction, or a change of path, and thereby identify the cell as belonging to the cell category associated with the zone. Alternatively, the imaging sensor may be configured to detect a threshold number of modified movements of a cell in a zone, e.g. the cell displaying at least 2, at least 5, or at least 10 bind and release events within the zone, and thereby identify the cell as belonging to the cell category associated with the zone.

The identification may lead to further actions, such as further analysis of the cell, or a cell sorting based on the categorization as two examples.

As an example, the device may enable cell sorting. In particular, the device may enable label-free cell sorting as the cells do not need to be labelled. Cells belonging to a certain category may be identified, based on if they display a modified movement, and subsequently diverted. The diversion may be made into smaller channels of the flow channel. Label-free cell sorting is advantageous as labels often need to be removed from the cells after sorting and before further analysis or further processing of the cells is performed. The removal of labels may be performed in a washing process which may be costly, bulky and damaging to the cells. Cell sorting may herein mean separating cells belonging to a cell category from cells not belonging to the cell category. Cells that are intended to be sorted out, separated from the other cells, may hereinafter be referred to as target cells.

The device may further comprise an illumination source. The illumination source may be configured to illuminate a cell in the flow channel, such that an interference pattern is formed by interference between object light having interacted with the biological cells and reference light which have not having interacted with the biological cells.

Thus, the device may operate according to the principles of digital holographic imaging. Such a device may enable a high cell throughput. An imaging sensor of a device operating according to the principles of digital holographic imaging may have a large field of view since a lens may not be needed between the image sensor and the flow channel. Further, an imaging sensor of a device operating according to the principles of digital holographic imaging may have a large depth of focus. Consequently, the imaging sensor may monitor a large area or a large volume, of the flow channel, for cells exhibiting modified movements. Monitoring a large area or volume simultaneously makes it possible to maintain a high flow rate and a high cell throughput.

The non-scattered light from the illumination source may be passed along a common optical path with the light being scattered by the cells. Thus, the interference pattern may be formed between scattered and non-scattered light at the image sensor in a so-called in-line holography set-up. Thus, the scattered and non-scattered light may share the same light path. However, according to an alternative, the non-scattered light may be passed along a separate reference light path, which is combined with the light having been scattered by the cells before reaching the image sensor. In such case, the light scattered by the cells may be either forward or backward scattered light.

The illumination source may be configured to emit at least partially coherent light. Coherent light may be advantageous as it may improve the interference visibility. A coherent illumination source may be a laser. However, it should be understood that also partially coherent light may provide an interference pattern with sufficient visibility. A partially coherent illumination source may e.g. be a light emitting diode which emits light directly onto the flow channel or through a pinhole onto the flow channel. A coherent illumination source may provide better interference visibility but be more expensive while a partially coherent illumination source may provide a worse interference visibility but be less expensive.

The device may further comprise a processor configured to analyze the time-sequence of interference patterns of the cell. The processor may be used for analyzing the modified movement of the cells, and be used for further analysis such as tracking and/or sorting of the cells.

The device may comprise a tracker configured to track the detected cell in a plurality of regions of the flow channel based on the imaging of the flow channel by the imaging sensor. The tracker may be configured to monitor the position of a detected cell in the flow channel over a time-sequence from the cell entering the flow channel, the detection of the cell exhibiting the modified movement until the cell leaves the flow channel. The tracker may be a processor monitoring the position of a detected cell based on information from the image sensor.

The use of a tracker allows a modified movement of a cell to be detected anywhere when the cell passes through the zone. Again, this facilitates the imaging sensor monitoring a large area or a large volume, of the flow channel, for cells exhibiting modified movements such that a high cell throughput may be achieved.

A processing unit may comprise the tracker. Such a processing unit may both track the cells and analyze the tracking to identify modified movements.

According to one embodiment the threshold may be set to below 5 times of a pixel size of the imaging sensor.

Thus, the cell moves less than five pixels of the imaging sensor between two images acquired by the imaging sensor.

Moreover, the frame rate of the first region is such that a supposed cell moving through the flow channel at a second speed, that is at a higher speed than the speed of actual biological cells moving within the first region, would move at least a distance of five pixels between consecutive frames representing the first region. Thus, the frame rate for representing the first region is not as high as it would need to be for allowing tracking of fast-moving biological cells.

According to one embodiment a frame rate associated with the second region may be set such that, between consecutive frames, a distance travelled by the biological cell moving at the second speed may be below the threshold value.

Thus, the biological cell moving at a second speed moves a distance below the threshold value. This may enable that the cell is visible in two consecutive frames, such that no information is lost between the frames. The frame rate associated with the second region may need to be larger than the frame rate of the first region, since the cell passing through the second region has a higher second speed than the first speed of the cell passing through the first region.

According to one embodiment the imaging sensor may be configured to acquire frames, wherein a frame may comprise a plurality of images of the biological cell.

Thus, while still acquiring the same number of frames there may be several images of the biological cell in one frame, i.e. several representations in different parts of the frame. The cell may be imaged several times in the same frame. This allows for one frame to keep information of a cell during a longer time, since the plurality of images of the biological cell within the frame ensures that the biological cell has not moved a long distance between consecutive images (within the single frame).

This allows for the frame rate associated with the first region as being the same as the frame rate associated with the second region, independent on the difference between the first and the second speed. In particular, neither the first frame rate nor the second frame rate needs to be so high that a biological cell moving at the second speed has not travelled a distance larger than the threshold value between consecutive frames.

According to one embodiment the device may comprise an illumination source, wherein the illumination source may be configured to illuminate the flow channel with a pulsed illumination, at a frequency higher than the frame rate for acquiring images.

By this, the cells may be imaged at a higher frequency than the frames. Thus, in each frame the cell is imaged several times.

According to one embodiment the frequency of illumination may be higher in the second region than in the first region.

The device may comprise several illumination sources, configured to illuminate the flow channel with a pulsed illumination at different frequencies higher than the frame rate for acquiring images.

For example, the device may comprise a first and a second illumination source. The first illumination source is associated with the first region. The pulsed illumination from the first illumination source may have a frequency being higher than the frame rate associated with the first region. The second illumination source is associated with the second region, and the pulsed illumination of the second illumination source may have a frequency being higher than the frame rate associated with the second region. The frequency of pulses from the first illumination source may be lower than the frequency of pulses from the second illumination source.

According to one embodiment the imaging sensor comprises a plurality of imagers, each comprising an array of photo-sensitive elements for detecting the interference pattern, wherein a first imager is associated with the first region and a second imager is associated with the second region.

An advantage of this is that the plurality of imagers may easily be set to have different rates of acquiring images. Moreover, an advantage is that the frame rate of the different imagers may be different. This is advantageous since the speed of the cells change while moving through the flow channel, and thus the first imager and the second imager may need a different imaging rate to not loose information of the cells.

The entire flow channel is jointly covered by the plurality of imagers.

According to one embodiment the first imager and the second imager may be configured to acquire frames at different frame rates.

Thus, the first imager may be associated with a first frame rate and the second imager may be associated with a second frame rate. The first frame rate is set such that, between consecutive frames, a distance travelled by a supposed biological cell moving at the second speed is larger than the threshold value. The second frame rate is set such that, between consecutive frames, a distance travelled by a supposed biological cell moving at the second speed is below the threshold value.

In other words, the first frame rate is lower than the second frame rate. Thus, when cells move with a higher speed in the second region, the second frame rate is adapted to this.

According to one embodiment the imaging sensor may be divided into at least a first imaging section and a second imaging section, each comprising a plurality of photo-sensitive elements for detecting the interference pattern, wherein the first imaging section may be associated with the first region and the second imaging section may be associated with the second region.

The first imaging section may have a different size than the second imaging section. Thus, the first imaging section may have the size of the first region, while the second imaging section may have the size of the second region.

An advantage of this is that the imaging section only covers the plurality of regions and not outside of the regions, thus cost for larger imaging sensors is saved.

According to one embodiment the first imaging section and second imaging section may be configured to acquire frames at different frame rates.

An advantage of this is that the frame rate can be closely adapted to the speed of the cells in the plurality of regions. This is advantageous since there is no need for excess power consumption while still covering the entire flow channel and the adaption to the different speeds of the cells.

According to a second aspect, a method for tracking biological cells is provided. The method comprising:
detecting, by an imaging sensor, an interference pattern by receiving object light, which is incident on the imaging sensor after having interacted with the biological cells to be tracked carried by a flow of liquid in a flow channel in a plurality of regions of the flow channel including at least one zone, and reference light, which is incident on the imaging sensor without having interacted with the biological cells, wherein
   each zone of the flow channel is associated with a cell category, wherein the zone of the flow channel is configured to modify movement of the biological cell in dependence of the biological cell belonging to the cell category;
tracking the biological cell through the plurality of regions, wherein the biological cell exhibits a first speed in a first region and a second speed in a second region, the first speed being lower than the second speed;
sequentially image, by the imaging sensor, the biological cell flowing through the plurality of regions, wherein the biological cell in consecutive images has moved a distance below a threshold value, wherein the imaging sensor acquires frames at a frame rate associated with the first region such that, between consecutive frames, a distance travelled by a supposed biological cell moving at the second speed is larger than the threshold value.

This aspect may generally present the same or corresponding advantages as the former aspect.

The interference pattern detected by the imaging sensor carries the information of the biological cells carried by the flow of liquid through the regions of the flow channel. Thus, by the detection of the interference pattern, the cells in each portion of the field of view, can be imaged. From the interference pattern, the tracking of the cell through the plurality of regions can be made.

When moving through the regions of the flow channel, the biological cell exhibits different speeds depending on, for example, the dimensions of the flow channel.

By the sequential imaging, the cells may be imaged to allow accurate tracking at all times. This is possible since the cells, between two consecutive images, has moved a distance below a threshold value. Moreover, frames of the cells are acquired at a frame rate that need not be set higher than what is required for tracking of a cell through a region associated with the frame. Thus, relatively low processing requirements are needed for imaging of the biological cells while no time gaps appear in the tracking.

### Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.
Fig. 1 is a device for tracking biological cells.
Fig. 2a is a device for tracking biological cells.
Fig. 2b is a schematic view of image information that is acquired with or without pulsed illumination and at different frame rates.
Fig. 3 is a device for tracking biological cells.
Fig. 4 is a device for tracking biological cells.
Fig. 5 is a flowchart of a method for tracking biological cells.

### Detailed description

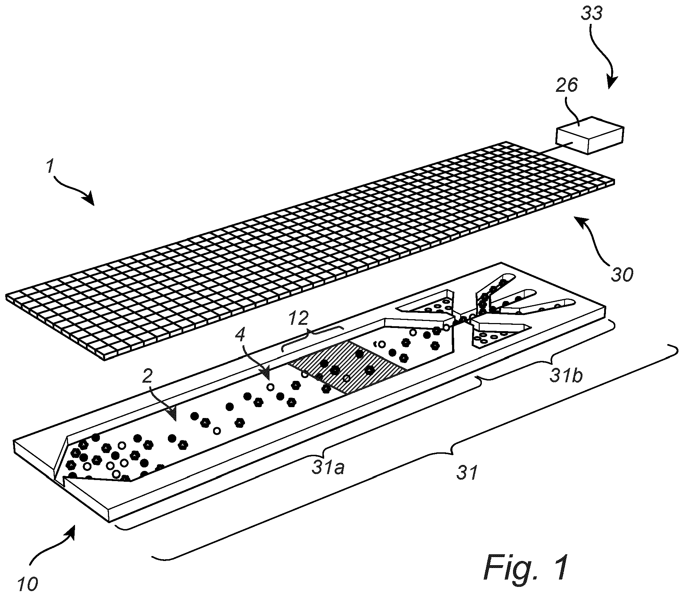

Fig. 1 illustrates a device 1 for tracking biological cells 4. The device 1 comprises a flow channel 10 configured to pass a flow of liquid 2. The flow of liquid 2 carries the biological cells 4 to be tracked. The biological cells 4 may belong to a cell category. The cell category can be identified by for instance the expression of antigens on the cell surface. A first cell category may be defined as cells 4 having a cell membrane comprising CD4 antigens and a second cell category may be defined as cells 4 having a cell membrane comprising CD8 antigens.

The flow channel 10 may be a microfluidic channel. The flow channel 10 may be defined by conventional lithography and sealed with a transparent cover slide, e.g. glass, polydimethylsiloxane (PDMS), or polycarbonate. The top part of the flow channel 10 may be covered with a cover slide, e.g. a glass slide, bonded to the PDMS.

The flow channel 10 comprises at least one zone 12. While moving through the flow channel 10 the biological cells 4 pass through the at least one zone 12. The flow channel 10 may comprise a plurality of zones. The biological cells 4 may then pass through the zones from the first to the last zone.

Each zone 12 of the flow channel 10 is associated with a cell category. The side walls, the bottom and/or top and/or obstacles in the zone 12 may be covered by a surface comprising molecules having an affinity for the cells 4 of the cell category. The molecules may be e.g. antibodies, aptamers, or lectins. For instance, the molecules may be anti-CD4 antibodies and the zone is thus then associated with cells belonging to the CD4 category. Alternatively, the molecules may be anti-CD8 antibodies and the zone is thus then associated with cells belonging to the CD8 category.

The zone 12 of the flow channel 10 is configured to modify movement of the biological cell 4 in dependence of the biological cell 4 belonging to the cell category.

The biological cells 4 may for instance hit the side walls, the bottom and/or top and/or obstacles in the zone 12 covered by the surface comprising molecules having an affinity for the cells 4 of the cell category during the travel through the channel 10. The modified movements may be expressed as cells 4 taking a characteristic type of path if they interact with the surface of the zone 12. A cell 4 belonging to the cell category associated with the zone 12 may for instance take a more undulating path in the zone 12 than in other parts of the channel 10. The molecules may bind and release a cell 4 belonging to the associated cell category of the zone 12. For example, an anti-CD4 antibody may bind to a cell 4 having a cell membrane comprising CD4 antigens, and subsequently release the cell. Thus, the movements of a cell 4 of the cell category moving through the zone 12 may change in a characteristic way that makes it possible to identify the cell as belonging to the cell category. When a cell 4 belongs to a category associated with a zone 12 the cell 4 may, in that zone 12, exhibit e.g. a bind and release event, a halt of motion, a change of speed, a change of direction, or a change of path.

The device 1 further comprises an imaging sensor 30 configured to detect an interference pattern by receiving object light, which is incident on the imaging sensor 30 after having interacted with the biological cells 4, and reference light, which is incident on the imaging sensor 30 without having interacted with the biological cells 4.

The imaging sensor 30 may comprise a plurality of photo-sensitive elements configured to detect incident light. The imaging sensor 30 may herein be a CCD or CMOS camera. The imaging sensor 30 may acquire a time-sequence of image frames of the changing interference pattern as cells 4 pass the imaging sensor 30.

The imaging sensor 30 may be arranged above or below the flow channel 10. However, it is also possible to arrange the imaging sensor 30 at any side of the flow channel 10.

The imaging sensor 30 is configured to detect the flow of liquid 2 in the flow channel 10 in a plurality of regions 31 of the flow channel 10 including the at least one zone 12 to track the biological cells 4 through the plurality of regions 31. The flow channel 10 is divided into a plurality of regions 31. The plurality of regions 31 overlap with the at least one zone 12. The number of regions 31 may differ, depending on for instance the shape of the flow channel 10. A region 31 may for instance cover a part of the flow channel 10 having the same dimensions through the entire region 31, and a new region may start if the flow channel 10 changes dimensions. For instance, the inlet or outlet of the flow channel 10 may have different dimensions as compared to the connecting part of the flow channel 10 between the inlet and the outlet. The connecting part may be one region and the inlet and/or outlet may have its own region.

The biological cell 4 exhibits a first speed in a first region 31a and a second speed in a second region 31b. The first speed being lower than the second speed. As is illustrated in Fig. 1, the first region 31a has a uniform width, while the second region 31b has a progressively smaller width as compared to the first region 31a. When the biological cells 4 moves through the flow channel, from the first region 31a to the second region 31b, the speed increases as the flow of liquid 2 carrying the cells 4 are forced from the broader width first region 31a to the smaller width second region 31b.

The imaging sensor 30 is configured to sequentially image the biological cell 4 flowing through the plurality of regions 31. Thus, images of the flow channel 10 are sequentially acquired. The biological cell 4 in consecutive images has moved a distance below a threshold value. Thus, the biological cell 4 has between two images moved below the threshold value, such that the biological cell 4 is imaged by two sequential images. In other words, when the biological cell 4 moves through the flow channel 10, images should be acquired in such a rate that there are only a short distance moved by a cell between two consecutive images. Thus, the threshold should be so low that a cell can be tracked between two consecutive images. When cells move, they interact with other cells and additionally they may have a random movement pattern. Thus, it is advantageous to acquire images at a rate where the cells 4 have not moved too far between two images such that the tracking can be accurate. It is especially advantageous when the tracking is used to identify the modified movement when the cell 4 passes through the zone 12. Then, differences between cells of the cell category interacting with the zone 12 must be distinguishable from the cells not belonging to the cell category and which do not interact with the zone 12. The threshold may be set to below 5 times of a pixel size of the imaging sensor.

The imaging sensor 30 is configured to acquire frames. Each frame may correspond to a single read-out of information from the imaging sensor 30 and hence a single exposure of the flow channel 10 imaged by the imaging sensor 30. The frames may image the same cell several times in the same frame. This may be achieved by using a pulsed illumination at a frequency higher than the frame rate.

A frame rate associated with the first region 31a is set such that, between consecutive frames, a distance travelled by a supposed biological cell moving at the second speed is larger than the threshold value. Thus, the supposed cell is an imaginary cell moving at the second speed. Thus, the distance travelled by the supposed cell is the distance that would be travelled by such a cell if there would be such a cell traveling through the first region 31a. When moving through the flow channel 10, an actual biological cell 4 has the first speed in the first region 31a and the second speed in the second region 31b. The first speed being lower than the second speed. The frame rate is set such that, when moving at the second speed the supposed biological cell moves longer than the threshold value between two consecutive frames acquired in the first region 31a. Thus, the frame rate of the first region 31a is too low to accurately image the supposed cell moving at the speed of actual cells in the second region. However, the frame rate of the first region 31a is high enough to capture an actual cell while moving in the first region 31a. Thus, the imaging sensor 30 is not required to have a high frame rate, even though such a high frame rate may be needed for allowing correctly tracking cells in other regions of the flow channel.

The frame rate associated with the second region 31b may be set such that, between consecutive frames, a distance travelled by the biological cell 4 moving at the second speed is below the threshold value. Thus, between consecutive frames of the second region 31b the cell has not moved farther than the threshold value and the biological cell 4 is imaged at a frame rate sufficient to capture the movement.

The device 1 may further comprise a processor 26 which may detect a cell exhibiting at least one modified movement based on the time-sequence of interference patterns. The processor 26 may e.g. perform a holographic reconstruction of two interference patterns in the time-sequence of interference patterns. Said two reconstructions may depict e.g. a cell in contact with a surface of the zone 12. If both reconstructed images show the cell 4 at the same location it may be deduced that the cell is stuck to the surface of the zone 12 and therefore has an affinity to the surface of the zone 12. If both reconstructed images show the cell 4 in contact with the surface of the zone 12 but at different locations, it may be deduced that the cell has stuck to the surface of the zone 12 and thereafter rolled along the surface of the zone 12. In either case, the cell 4 may be detected as exhibiting a modified movement.

The processor 26 may not necessarily perform a full holographic reconstruction of two interference patterns in the time-sequence of interference patterns. The cell 4 may be detected as exhibiting a modified movement based on two, or more, interference patterns in the time-sequence of interference patterns or partial holographic reconstructions of the two, or more, interference patterns.

The device 1 may comprise a tracker 33 configured to track the detected cell 4 in the flow channel 10. The processor 26 may herein be configured to track a detected cell 4, e.g. follow the position of the cell 4 through the flow channel 10, based on the time-sequence of interference patterns of the illuminated cell 4. The processor 26 may track the cell 4 based on holographic reconstructions of the time-sequence of interference patterns, on partial holographic reconstructions of the time-sequence of interference patterns, or based on the interference patterns without any reconstruction.

The tracker 33 may be able to track the biological cell 4 through the flow channel 10 in an accurate way thanks to the sequential imaging where the biological cell 4 in consecutive images has moved a distance below a threshold value in combination with the acquired frames, having a frame rate associated with the first region 31a set such that, between consecutive frames, a distance travelled by a supposed biological cell moving at the second speed is larger than the threshold value.

The processor 26 may be a central processing unit (CPU), which may execute the instructions of one or more computer programs in order to provide desired functionality.

The processor 26 may alternatively be implemented as firmware arranged e.g. in an embedded system, or as a specifically designed processing unit, such as an Application-Specific Integrated Circuit (ASIC) or a Field-Programmable Gate Array (FPGA), which may be configured to implement desired functionality.

The processor 26 may be arranged in a common housing with the imaging sensor 30. However, the processor 26 may be physically arranged anywhere in relation to the imaging sensor 30, such as being arranged in a server "in the cloud".

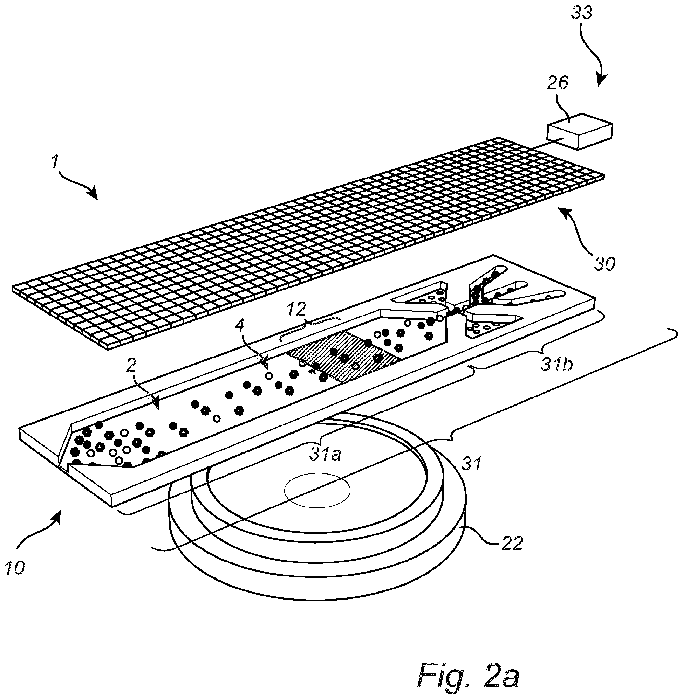

Fig. 2a illustrates a device 1 for tracking biological cells 4. The device 1 has many similarities with the device 1 of Fig. 1 and only the differences are described below.

The device may further comprise an illumination source 22. The illustrated illumination source 22 is configured to illuminate the cells 4 as they pass through the flow channel 10. The illumination source 22 may herein be a coherent illumination source 22, e.g. a laser, or a partially coherent illumination source 22, e.g. a light emitting diode or a light emitting diode with a pin hole or aperture. In the figure, the illumination source 22 and the imaging sensor 30 are arranged on opposite sides of the flow channel 10. The flow channel 10 is herein at least partially transparent such that the light may travel through the flow channel 10. It should be understood that other arrangement of the illumination source 22 and the imaging sensor 30 is possible.

The illumination source 22 may be configured to illuminate the flow channel 10 with a pulsed illumination, at a frequency higher than the frame rate for acquiring images. The frequency of illumination may be higher in the second region 31b than in the first region 31a. This is to compensate for the faster speed in the second region 31b compared to the first region 31a.

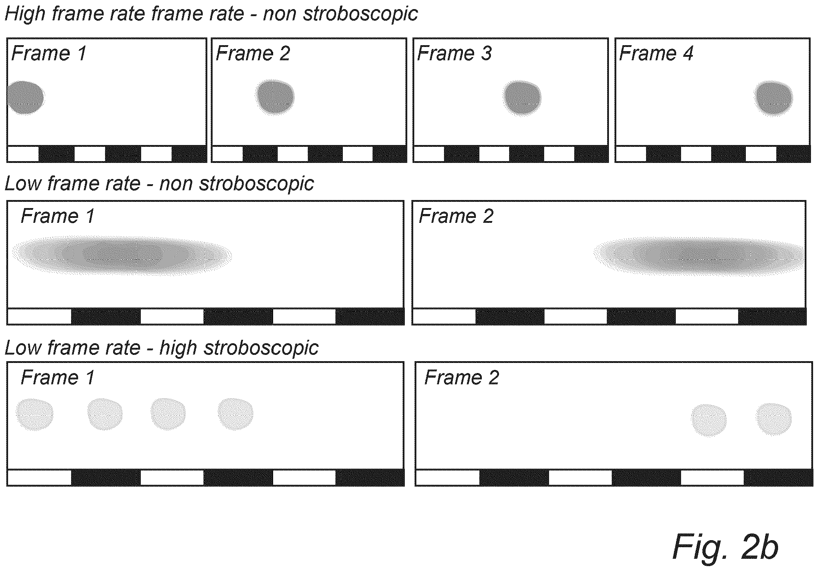

Further, illustrated in Fig. 2b, the imaging sensor 30 is configured to acquire frames, wherein a frame comprises a plurality of images of the biological cell 4. Fig. 2b illustrates how different frame rates can be combined with the illumination. A pulsed illumination at a rate above the frame rate allows the cell to be imaged several times in each frame. This in turn allows the cell to be accurately analyzed through the movement in the flow channel 10.

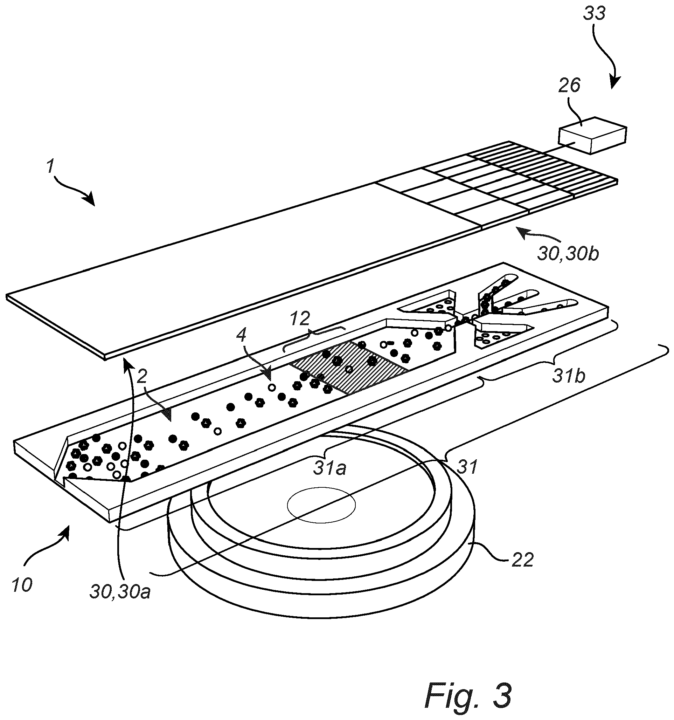

Fig. 3 illustrates a device 1 for tracking biological cells 4. The device 1 has many similarities with the device 1 of Fig. 1 and Fig 2a and only the differences are described below.

The imaging sensor 30 may comprise a plurality of imagers 30a, 30b. Each of the plurality of imagers 30a, 30b may comprise an array of photo-sensitive elements for detecting the interference pattern. A first imager 30a is associated with the first region 31a and a second imager 30b is associated with the second region 31b. Thus, the first region 31a and the second region 31b may be imaged by different imagers 30a, 30b. The imagers 30a, 30b may be arranged close by each other, such that all parts of the flow channel 10 are covered by the combined field of view of the imagers 30a, 30b. Moreover, the first imager 30a and the second imager 30b may be configured to acquire frames at different frame rates. The frame rate of the first imager 30a is set such that, between consecutive frames, a distance travelled by a supposed biological cell moving at the second speed is larger than the threshold value. The frame rate of the second region 30b is set such that, between consecutive frames, a distance travelled by the biological cell 4 moving at the second speed is below the threshold value. Thus, the first imager 30a and the second imager 30b are configured for the speed associated with the first region 31a and the second region 31b, respectively.

It should be understood that more than two imagers may be used, such as three, four, five or six imagers. One region may be covered by a combination of several imagers. The complexity of the flow channel 10 may decide how many imagers are needed.

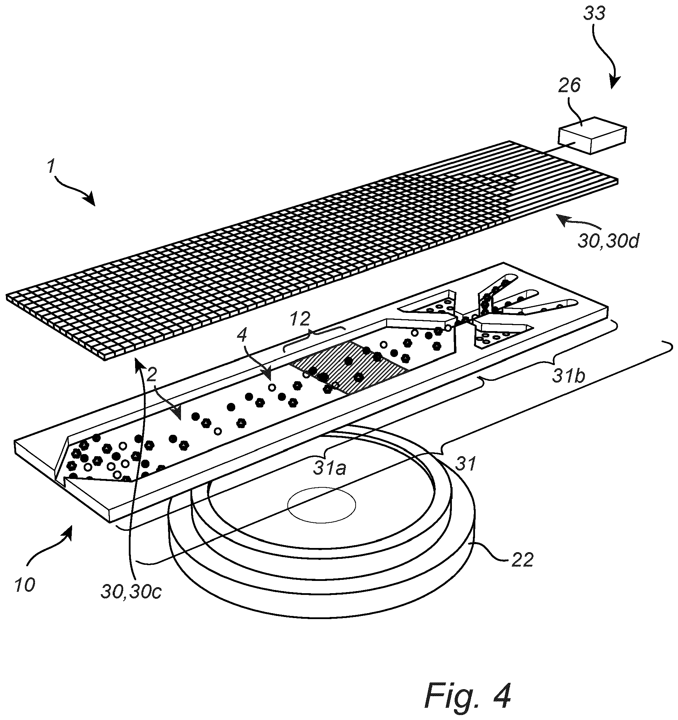

Fig. 4 illustrates a device 1 for tracking biological cells 4. The device 1 has many similarities with the device 1 of Fig. 1 and Fig 2a and only the differences are described below.

The imaging sensor 30 may be divided into at least a first imaging section 30c and a second imaging section 30d. Each imaging section 30c, 30d comprising a plurality of photo-sensitive elements for detecting the interference pattern. The first imaging section 30c is associated with the first region 31a and the second imaging section 30d is associated with the second region 31b. The imaging sensor 30 may be divided into several imaging sections. The first imaging section 30c and second imaging section 30d may be configured to acquire frames at different frame rates.

The imaging sensor 30 may be configured to be controlled for controlling read-out of different imaging sections 30c, 30d to be performed differently. In particular, the imaging sensor 30 may be configured to control each column of the imaging sensor 30 separately. Each imaging section 30c, 30d may be defined by one or more columns.

The imaging sensor 30 may be arranged to have a common size of each of the columns. However, in regions where the biological cells move at a high speed, the width of the flow channel 10 may be smaller than in regions where the biological cells move at a low speed. This implies that a number of pixels needed for imaging the full width of the flow channel 10 is lower in the columns corresponding to regions where the biological cells move at a high speed. Hence, fewer pixels may need to be read out from such columns.

The imaging sensor 30 may thus be configured to control the number of pixels to be read out from each column. By reducing the number of pixels to be read out, the frame rate may be correspondingly increased.

Hence, the imaging sensor 30 may be configured to read a high number of pixels per column at a low frame rate in imaging section 30c, which is configured to image the first region 31a. The imaging sensor 30 may further be configured to read a low number of pixels per column at a high frame rate in imaging section 30d, which is configured to image the second region 31b.

The frame rate of the first imaging section 30c may thus be adapted to the first speed. Thus, the frame rate of the first imaging section 30c may be set such that, between consecutive frames, a distance travelled by a supposed biological cell moving at the second speed is larger than the threshold value. The frame rate of the second imaging section 30d may be set such that, between consecutive frames, a distance travelled by the biological cell 4 moving at the second speed is below the threshold value.

Thanks to using an imaging sensor 30 with imaging sections 30c, 30d, there may be no gaps between the neighboring imaging sections 30c, 30d such that all parts of the flow channel 10 are covered by the combined field of view of the imaging sections 30c, 30d with no gaps within the field of view.

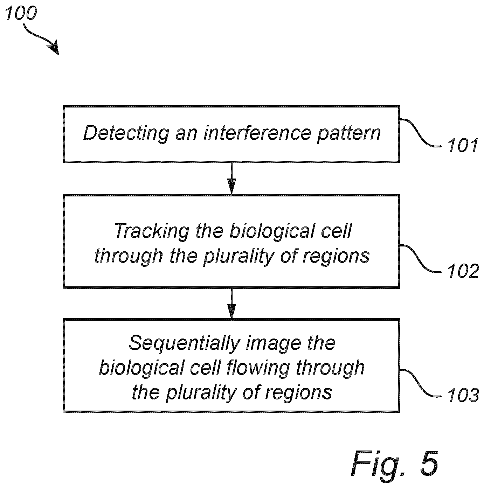

Fig. 5 illustrates a flow chart of method 100 for tracking biological cells 4. The method 100 comprises detecting 101, by an imaging sensor 30, an interference pattern by receiving object light, which is incident on the imaging sensor 30 after having interacted with the biological cells 4 to be tracked carried by a flow of liquid 2 in a flow channel 10 in a plurality of regions 31 of the flow channel 10 including at least one zone 12, and reference light, which is incident on the imaging sensor 30 without having interacted with the biological cells 4.

Each zone 12 of the flow channel 10 is associated with a cell category. The zone 12 of the flow channel 10 is configured to modify movement of the biological cell 4 in dependence of the biological cell 4 belonging to the cell category.

The method 100 further comprises tracking 102 the biological cell 4 through the plurality of regions 31. The interference pattern detected 101 by the imaging sensor 30 carries the information of the biological cells 4 carried by the flow of liquid 2 through the regions 31 of the flow channel 10. Thus, by the detection 101 of the interference pattern, the cells in each portion of the field of view, can be imaged. From the interference pattern, the tracking 102 of the cell through the plurality of regions can be made.

The biological cell 4 exhibits a first speed in a first region 31a and a second speed in a second region 31b. The first speed being lower than the second speed. When moving through the regions 31 of the flow channel 10, the biological cell 4 exhibits different speeds depending on, for example, the dimensions of the flow channel 10.

The method 100 further comprises sequentially image 103, by the imaging sensor 30, the biological cell 4 flowing through the plurality of regions 31. The biological cell 4 in consecutive images has moved a distance below a threshold value. By the sequential imaging, the cells 4 are covered at all times. This is possible since the cells 4, between two consecutive images, has moved a distance below a threshold value.

The imaging sensor 30 acquires frames at a frame rate associated with the first region 31a such that, between consecutive frames, a distance travelled by a supposed biological cell moving at the second speed is larger than the threshold value. Thus, no time gaps appear in the tracking as the frame rate is adapted to the speed of the cells 4 in the different regions 31.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A device (1) for tracking biological cells (4), the device (1) comprising:
a flow channel (10) configured to pass a flow of liquid (2), wherein:
the flow of liquid (2) carries the biological cells (4) to be tracked,
the flow channel (10) comprises at least one zone (12),
each zone (12) of the flow channel (10) is associated with a cell category, wherein the zone (12) of the flow channel (10) is configured to modify movement of the biological cell (4) in dependence of the biological cell (4) belonging to the cell category;
an imaging sensor (30) configured to detect an interference pattern by receiving object light, which is incident on the imaging sensor (30) after having interacted with the biological cells (4), and reference light, which is incident on the imaging sensor (30) without having interacted with the biological cells (4), the imaging sensor (30) being configured to detect the flow of liquid (2) in the flow channel (10) in a plurality of regions (31) of the flow channel (10) including the at least one zone (12) to track the biological cells (4) through the plurality of regions (31), wherein the biological cell (4) exhibits a first speed in a first region (31a) and a second speed in a second region (31b), the first speed being lower than the second speed;
wherein the imaging sensor (30) is configured to sequentially image the biological cell (4) flowing through the plurality of regions (31), wherein the biological cell (4) in consecutive images has moved a distance below a threshold value, wherein the imaging sensor (30) is configured to acquire frames, wherein a frame rate associated with the first region (31a) is set such that, between consecutive frames, a distance travelled by a supposed biological cell moving at the second speed is larger than the threshold value.

2. The device (1) according to claim 1, wherein the threshold is set to below 5 times of a pixel size of the imaging sensor (30).

3. The device (1) according to any one of claims 1 or 2, wherein a frame rate associated with the second region (31b) is set such that, between consecutive frames, a distance travelled by the biological cell (4) moving at the second speed is below the threshold value.

4. The device (1) according to any one of claims 1 to 3, wherein the imaging sensor (30) is configured to acquire frames, wherein a frame comprises a plurality of images of the biological cell (4).

5. The device (1) according to claim 4, wherein the device (1) comprises an illumination source (22), wherein the illumination source (22) is configured to illuminate the flow channel (10) with a pulsed illumination, at a frequency higher than the frame rate for acquiring images.

6. The device (1) according to claim 5, wherein the frequency of illumination is higher in the second region (31b) than in the first region (31a).

7. The device (1) according to any one of the preceding claims, wherein the imaging sensor (30) comprises a plurality of imagers (30a, 30b), each comprising an array of photo-sensitive elements for detecting the interference pattern, wherein a first imager (30a) is associated with the first region (31a) and a second imager (30b) is associated with the second region (31b).

8. The device (1) according to claim 7, wherein the first imager (30a) and the second imager (30b) are configured to acquire frames at different frame rates.

9. The device (1) according to any one of claims 1 to 6, wherein the imaging sensor (30) is divided into at least a first imaging section (30c) and a second imaging section (30d), each comprising a plurality of photo-sensitive elements for detecting the interference pattern, wherein the first imaging section (30c) is associated with the first region (31a) and the second imaging section (30d) is associated with the second region (31b).

10. The device (1) according to claim 9, wherein the first imaging section (30c) and second imaging section (30d) are configured to acquire frames at different frame rates.

11. A method (100) for tracking biological cells (4), the method (100) comprising:
detecting (101), by an imaging sensor (30), an interference pattern by receiving object light, which is incident on the imaging sensor (30) after having interacted with the biological cells (4) to be tracked carried by a flow of liquid (2) in a flow channel (10) in a plurality of regions (3a) of the flow channel (10) including at least one zone (12), and reference light, which is incident on the imaging sensor (30) without having interacted with the biological cells (4), wherein
each zone (12) of the flow channel (10) is associated with a cell category, wherein the zone (12) of the flow channel (10) is configured to modify movement of the biological cell (4) in dependence of the biological cell (4) belonging to the cell category;
tracking (102) the biological cell (4) through the plurality of regions (31), wherein the biological cell (4) exhibits a first speed in a first region (31a) and a second speed in a second region (31b), the first speed being lower than the second speed;
sequentially image (103), by the imaging sensor (30), the biological cell (4) flowing through the plurality of regions (31), wherein the biological cell (4) in consecutive images has moved a distance below a threshold value, wherein the imaging sensor (30) acquires frames at a frame rate associated with the first region (31a) such that, between consecutive frames, a distance travelled by a supposed biological cell moving at the second speed is larger than the threshold value.
